# EUROPEAN PATENT SPECIFICATION

(11) **EP 3 072 838 B1**
(45) Date of publication and mention of the grant of the patent: **04.07.2018**
(21) Application number: 15160634.0
(22) Date of filing: 24.03.2015
(51) Int. Cl.: B65G 65/23

(54) **AN APPARATUS FOR UNLOADING BAGGAGE FROM A BAGGAGE CART AND A METHOD OF OPERATING THE APPARATUS**
VORRICHTUNG ZUM ENTLADEN VON GEPÄCK AUS EINEM GEPÄCKHANDWAGEN UND VERFAHREN ZUM BETRIEB DER VORRICHTUNG
APPAREIL DE DÉCHARGEMENT DE BAGAGES À PARTIR D'UN CHARIOT À BAGAGES ET PROCÉDÉ D'UTILISATION DE L'APPAREIL

(43) Date of publication of application: 28.09.2016
(73) Proprietor: Ingenieursbureau Moderniek B.V., 3762 EV Soest (NL)
(72) Inventor: Nijmeijer, Johannes Jan, 3762 VC Soest (NL)
(74) Representative: De Vries & Metman

(56) References cited:
- EP-A1- 2 281 762
- US-A- 1 906 126
- US-A- 3 994 405

## Description

The present invention relates to an apparatus for unloading baggage from a baggage cart according to the preamble of claim 1 and a method of operating such an apparatus. An apparatus for unloading baggage from a baggage cart is known from EP 1 314 666. In the known apparatus a baggage container, more specifically a ULD (Unitized Load Device), is secured on a baggage trolley and placed next to a loading bay of a conveyor system. The baggage trolley together with the baggage container thereon is swivelled such that the cargo present in the baggage container slides out onto a conveyor belt disposed alongside. A drawback of the known apparatus is that baggage articles may be kept to each other in the container until a relatively large angle of tilting and then suddenly fall down onto the conveyor belt, causing damage to the baggage articles or the conveyor belt.

US 1,906,126 is related to a combination of a filled basket supply conveyor, a receiving conveyor parallel with the supply conveyor, open top baskets and like containers for rows of cylindrical articles, and means at the end of the receiving conveyor for receiving and diagonally turning each basket so that the open top thereof will be at the side of the basket facing the receiving conveyor and the rows of the cylindrical articles changed from vertical to sidewise position for easy discharge of the contents to the receiving conveyor. US 3,994,405 discloses an apparatus for unloading baggage from a baggage cart according to the preamble of claim 1 and more specifically to a luggage container unloader wherein at least one of the plurality of pivoting doors is mounted on a parallelogram hinge the imaginary axis of which is at least approximately congruent with the axis about which the luggage containers are pivoted, whereby the relative positions of the containers, the conveyors on which the containers are carried through the unloading station, and the pivoting doors remain fixed while the containers are being conveyed through the unloading station.

An object of the invention is to provide an apparatus for unloading baggage from a baggage cart with minimal risk of damaging baggage articles.

This object is accomplished with the apparatus according to the invention which is as stated in the appended claim 1. An advantage of the apparatus according to the invention is that during tilting a baggage cart the baggage retaining member can be moved together with the baggage cart on the cart support such that it stays at an open side or unloading side of the baggage cart in order to prevent baggage articles from falling down in an unpredicted manner. The risk of damaging the falling baggage articles or generating a sudden pile of baggage articles on a downstream discharge conveyor, for example, can be minimized. Since the support tilting axis is located at the unloading side of the cart support, a baggage cart should be located at the cart support such that an unloading side of the baggage cart is located at the unloading side of the cart support. The unloading side of a baggage cart can be a lateral opening of a baggage cart as seen in transporting direction thereof. The cart support and the baggage retaining member may be moved by means of actuators, for example hydraulic and/or electrical actuators, which are controlled by means of a controller.

In a practical embodiment the baggage retaining member is tiltable with respect to the frame about a retaining member tilting axis at the unloading side of the cart support. Since both the cart support and the baggage retaining member are tiltable, control of the baggage retaining member in order to follow a tilting movement of a loaded baggage cart can be performed relatively easily.

The support tilting axis and the retaining member tilting axis may substantially coincide. This means that the displacement of the retaining member and the cart support can be synchronized easily.

Preferably, the retaining member and the cart support cooperate such that under operating conditions they are tilted synchronously during a period of tilting the cart support.

In case of tilting both the baggage retaining member and the cart support, the baggage retaining member may be tiltable about a larger angle than the cart support. Under operating conditions this creates a space between the baggage retaining member and a baggage cart on the cart support at a final tilting position of the cart support, in which space baggage articles from the baggage cart can be collected and taken away. The baggage articles can be transported from that space in a direction away from the cart support, for example by means of a conveyor.

In a preferred embodiment the baggage retaining member comprises a conveyor track for transporting baggage articles in a direction away from the cart support, since the retaining member is then used for two functions: preventing baggage articles from falling too early from a baggage cart on the cart support during tilting, on the one hand, and transporting baggage articles in a direction away from the cart support, on the other hand. The latter function may be performed during a final part of a tilting movement of the cart support or after reaching a final tilting position of the cart support.

In practice, the baggage retaining member may be movable between an upward position for retaining baggage articles and a lying position for transporting baggage articles. Under operating conditions, in the upward position the conveyor track may extend vertically along an unloading side of a baggage cart on the cart support.

The conveyor track may comprise a drivable endless conveyor belt for transporting baggage articles. In a first part of an unloading action the conveyor belt may be switched-off when the conveyor track is used as a baggage retaining member. It may be started upon approaching or reaching a final tilting position of the cart support or thereafter, for example when a space is created between the baggage cart on the cart support and the conveyor track.

The cart support may comprise a platform on which a baggage cart can be placed. The baggage cart can be driven, for example by means of a tractor, to the apparatus and placed on the tiltable platform. The baggage cart may be de-coupled from the tractor if only the baggage cart fits on the platform.

The platform may be elongate and have a longitudinal axis which has a similar direction as the support tilting axis. In that case a baggage cart is placed onto the platform such that a lateral unloading side or open side of the baggage cart is located at the unloading side of the cart support. The baggage cart can be driven onto the platform easily since the longitudinal direction of the platform is similar to the driving direction of the baggage cart.

It is noted that the cart support may be provided with holding means for keeping a baggage cart temporarily fixed to the cart support during an unloading action.

The frame may be movable in order to have a mobile apparatus. This allows the apparatus to be used in a flexible way, for example at different locations at an airport.

The invention is also related to a method of operating an apparatus as described hereinbefore, wherein at least a baggage cart is driven to the apparatus and placed on the cart support, wherein the baggage retaining member is set such that it extends next to an open side of the baggage cart, after which simultaneously the cart support is tilted and the retaining member is moved in the same direction such that baggage articles of the baggage cart are retained until a predetermined tilting angle of the cart support is achieved.

The baggage retaining member and the baggage cart may be moved away from each other after the predetermined tilting angle of the cart support is achieved in order to create space between the baggage cart and the baggage retaining member such that baggage articles can be removed from that space.

The invention will hereafter be elucidated with reference to drawings showing embodiments of the invention by way of example.
Fig. 1 is a very schematic side view of an embodiment of an apparatus for unloading baggage from a baggage cart according to the invention.
Fig. 2 is a perspective view of an example of a baggage cart.
Figs. 3 and 4 are very schematic plan views of alternative embodiments of an apparatus according to the invention.

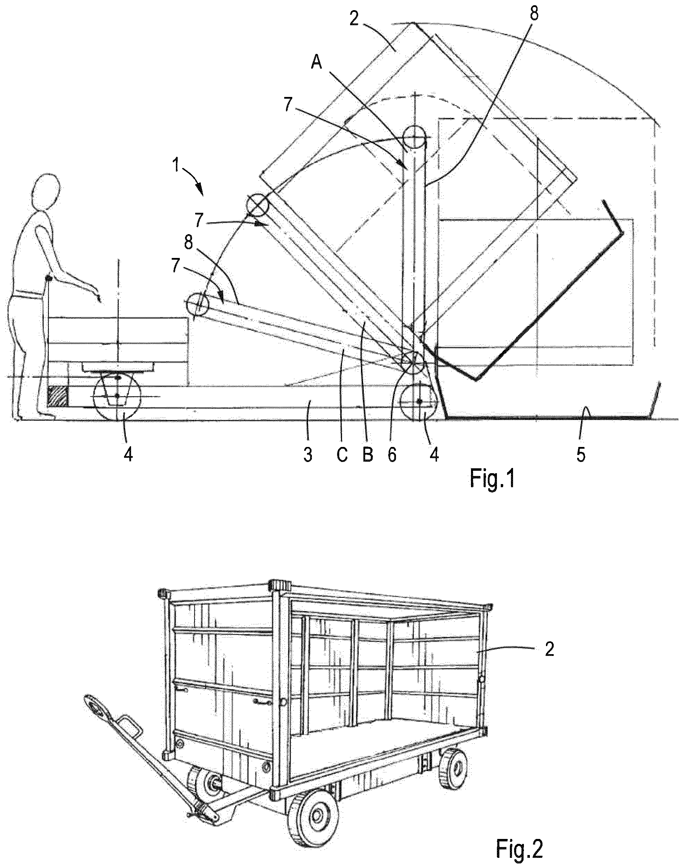

Fig. 1 shows an embodiment of an apparatus 1 for unloading baggage from a baggage cart 2 according to the invention. An example of the baggage cart 2 is shown in Fig. 2. It is noted that in Fig. 1 the baggage cart 2 is depicted in a very schematic way. A baggage cart 2 as shown in Fig. 2 is typically used in airports to transport baggage throughout airport ground facilities, for example passenger baggage. Usually, a plurality of baggage carts are connected in a train and towed by a tractor. A lot of different cart configurations are known, for example covered carts, uncovered carts, single-sided and double-sided access carts, etc. The baggage cart 2 as shown in Fig. 2 has a roof and a single open side which may be covered during travelling, for example by means of a curtain which can be folded back over the roof of the cart 2 before emptying the cart 2.

The apparatus 1 as shown in Fig. 1 is suitable for tilting a baggage cart 2 in order to unload baggage from the cart 2 through the open side or unloading side thereof. It is noted that the unloading side may be partly closed in an alternative type of baggage cart 2.

The apparatus 1 comprises a frame 3 which is provided with wheels 4 such that the apparatus 1 is movable. The apparatus 1 has a tiltable cart support in the form of an elongated platform 5. The length of the platform 5 of the embodiment as shown in Fig. 1 is selected such that a single cart 2 fits thereon. Under operating conditions a cart 2 can be driven by a tractor and placed onto the platform 5, after which the tractor and cart 2 can be de-coupled. Hence, in the embodiment as shown in Fig. 1 the driving direction or longitudinal direction of the cart 2 is the same as the longitudinal direction of the platform 5. After parking a loaded baggage cart 2 on the platform 5, it can be emptied by the apparatus 1. The platform 5 as shown in Fig. 1 has a trough-shape, but alternative shapes are conceivable.

The platform 5 is mounted to the frame 3 and can be tilted with respect to the frame 3 about a support tilting axis 6. The support tilting axis 6 extends at an unloading side of the platform 5, in this case parallel to the longitudinal direction of the elongated platform 5. It may be clear that the open side of the cart 2, through which baggage articles should be unloaded, is also located at the unloading side of the platform 5 during an unloading action.

The apparatus 1 also comprises a conveyor track 7 including a drivable endless conveyor belt 8. The conveyor track 7 is mounted to the frame 3 and can tilt with respect to the frame 3 about a conveyor tilting axis. In the embodiment as shown in Fig. 1 the conveyor tilting axis coincides with the support tilting axis 6 of the platform 5, but this may be different in an alternative embodiment. The conveyor track 7 has a longitudinal direction which extends transversely with respect to the conveyor tilting axis, in this case the support tilting axis 6. The conveyor track 7 can be tilted between an upwardly directed retaining position A, which is illustrated in Fig. 1 by a substantially vertical position, and a lying position or transporting position C. Fig. 1 also shows an intermediate position B between the retaining position A and the lying position C.

When an unloading process is started and the loaded baggage cart 2 is in the correct parking position on the platform 5, the conveyor track 7 is in its retaining position A and extends next to the open side of the cart 2. In this situation the conveyor belt 8 will not be operated yet. When tilting the loaded cart 2 in its turning direction the conveyor track 7 will be tilted synchronously with the platform 5 until the intermediate position B of the conveyor track 7 is achieved. In fact, the conveyor track 7 and the platform 5 form an L-shaped structure which is tilted. During this period baggage articles contained in the baggage cart 2 may slide towards the conveyor track 7, which functions as a baggage retaining member to prevent baggage articles from falling out too early from the baggage cart 2. The intermediate position B may correspond to the maximum tilting angle of the platform 5.

In the embodiment as shown in Fig. 1 the conveyor track 7 is tiltable about a larger angle than the platform 5 and will be tilted further downwardly from its intermediate position B to its transporting position C. During the latter period the platform remains at the same inclined position. Due to increasing space between the conveyor track 7 and the baggage cart 2, baggage articles may gradually move from the baggage cart 2 onto the conveyor track 7. In this condition the conveyor belt 8 can be started in order to transport the unloaded baggage articles away from the baggage cart 2 to a location where a person may handle the baggage, as illustrated in Fig. 1. In the lying or transporting position C of the conveyor track 7 as shown in the embodiment of Fig. 1, the conveyor track 7 is still angled with respect to a horizontal plane, but in an alternative embodiment it may be oriented horizontally or inclined downwardly as seen from the platform 5. The maximum tilting angle of the platform 5 may be 45°, for example, whereas the angle between the conveyor track 7 and a horizontal plane in the transporting position C may be 10°, for example. Of course, many alternative angles are possible.

It is noted, that the apparatus 1 can be used in alternative manners than described hereinbefore. For example, both the conveyor track 7 and the platform 5 may be tilted synchronously until the conveyor track 7 has reached the transporting position C, after which the platform 5 is tilted back in a smooth manner in order to create space between the conveyor track 7 and the baggage cart 2.

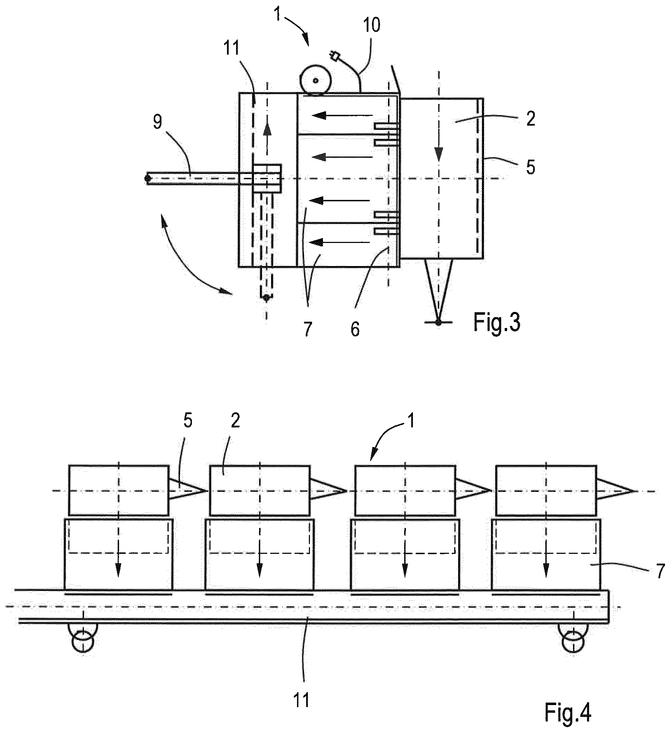

Fig. 3 shows an alternative embodiment of the apparatus 1 as seen from above. This embodiment is also mobile. The frame 3 is provided with a foldable tow rod 9 which can be coupled to a tractor for displacing the apparatus 1. The apparatus 1 also comprises a power cable 10 which can be connected to a local power supply for drive members (not shown) of the apparatus 1 in order to operate the tiltable conveyor track 7 and platform 5. Fig. 3 shows a baggage cart 2 on the platform 5 which is disconnected from a tractor or a train of carts.

The apparatus 1 as shown in Fig. 3 has four separate conveyor tracks 7 next to each other in the longitudinal direction of the platform 5. The conveyor tracks 7 can be tilted independently from each other. Each of the conveyor tracks 7 comprise an endless conveyor belt which can be driven independently from each other, as well. The conveyor belts can be driven in a direction perpendicular to the respective conveyor tilting axes. This embodiment provides great flexibility to the apparatus 1. For example, the conveyor tracks 7 can be tilted synchronously upon tilting the platform 5 until the four conveyor tracks 7 reach a common intermediate position at which the platform 5 reaches its maximum tilting position. Subsequently, one or more of the conveyor tracks 7 can be tilted further downwardly to the transporting position such that a part of the baggage articles can be transported away from the cart 2. In a next step, more conveyor tracks 7 can be tilted from the intermediate position to the transporting position, such that emptying different sections of the baggage cart 2 located in longitudinal direction thereof can be performed in a controlled manner. The apparatus 1 as shown in Fig. 3 is provided with a discharge conveyor 11 on which the baggage articles are received from the four conveyor tracks 7. It is noted that alternative embodiments may have more or less than four separate conveyor tracks 7.

Fig. 4 shows another alternative embodiment of the apparatus 1 as seen from above. In this case the apparatus 1 has a fixed location and comprises a platform 5 on which a train of four carts 2 can be placed. The train of baggage carts 2 can be tilted at the same time and at each of the carts 2 a tiltable conveyor track 7 is located. The conveyor tracks 7 can be operated synchronously or independently from each other, similarly as described in relation to the embodiments discussed hereinbefore. The apparatus 1 as shown in Fig. 4 is also provided with a discharge conveyor 11 on which the baggage is received from the four conveyor tracks 7.

The conveyor track 7 and the platform 5 may be tilted by means of hydraulic cylinders (not shown), but alternative drive means are conceivable.

From the foregoing, it will be clear that the invention provides an apparatus for unloading baggage from a baggage cart in an efficient and smooth manner.

The invention is not limited to the embodiments shown in the drawings and described hereinbefore, which may be varied in different manners within the scope of the claims. For example, it is conceivable that the conveyor track comprises a guide chute instead of a conveyor belt, which is inclined downwardly as seen from the platform in order to transport unloaded baggage away from the platform. Furthermore, the baggage cart may also comprise a dolly on which a container, such as a ULD (Unitized Load Device), is attached.

## Claims

1. An apparatus (1) for unloading baggage from a baggage cart (2), comprising a frame (3) and a cart support (5) for supporting a baggage cart (2), the cart support (5) being mounted to the frame (3) and tiltable with respect thereto about a support tilting axis (6), apparatus (1) is provided with a baggage retaining member (7) for preventing baggage articles from falling too early from a baggage cart (2) on the cart support (5) during tilting, wherein the baggage retaining member (7) is located at the unloading side of the cart support (5) and movably mounted to the frame (3) such that it can be moved in the same turning direction as the cart support (5), **characterized in that** the support tilting axis (6) is located at the frame (3) at an unloading side of the cart support (5).

2. An apparatus (1) according to claim 1, wherein the baggage retaining member (7) is tiltable with respect to the frame (3) about a retaining member tilting axis at the unloading side of the cart support (5).

3. An apparatus (1) according to claim 2, wherein the support tilting axis (6) and the retaining member tilting axis substantially coincide.

4. An apparatus (1) according to claim 2 or 3, wherein the baggage retaining member (7) and the cart support (5) cooperate such that under operating conditions they are tilted synchronously during a period of tilting the cart support (5) .

5. An apparatus (1) according to one of the claims 2-4, wherein the baggage retaining member (7) is tiltable about a larger angle than the cart support (5).

6. An apparatus (1) according to one of the preceding claims, wherein the baggage retaining member comprises a conveyor track (7) for transporting baggage articles in a direction away from the cart support (5).

7. An apparatus (1) according to claim 6, wherein the baggage retaining member (7) is movable between an upward position (A) for retaining baggage articles and a lying position (C) for transporting baggage articles.

8. An apparatus (1) according to claim 6 or 7, wherein the conveyor track (7) comprises a drivable endless conveyor belt (8) for transporting baggage articles.

9. An apparatus (1) according to one of the preceding claims, wherein the cart support comprises a platform (5) on which a baggage cart (2) can be placed.

10. An apparatus (1) according to claim 9, wherein the platform (5) is elongate having a longitudinal axis which has a similar direction as the support tilting axis (6).

11. An apparatus (1) according to one of the preceding claims, wherein the frame (3) is movable.

12. A method of operating the apparatus (1) according to one of the preceding claims, wherein at least a baggage cart (2) is driven to the apparatus (1) and placed on the cart support (5), wherein the baggage retaining member (7) is set such that it extends next to an open side of the baggage cart (2), after which simultaneously the cart support (2) is tilted and the retaining member (7) is moved in the same direction such that baggage articles of the baggage cart (2) are retained until a predetermined tilting angle of the cart support (5) is achieved.

13. A method according to claim 12, wherein the baggage retaining member (7) and the baggage cart (2) are moved away from each other after said predetermined tilting angle of the cart support (5) is achieved.

## Patentansprüche

1. Vorrichtung (1) zum Entladen von Gepäck aus einem Gepäckwagen (2), aufweisend einen Rahmen (3) und einen Wagenträger (5) zum Tragen eines Gepäckwagens (2), wobei der Wagenträger (5) an dem Rahmen (3) angebracht ist und um eine Träger-Kippachse (6) bezüglich des Rahmens kippbar ist,
wobei die Vorrichtung (1) mit einem Gepäckrückhalteelement (7) versehen ist, um zu verhindern, dass während des Kippens Gepäckstücke zu früh aus einem Gepäckwagen (2) auf dem Wagenträger (5) fallen, wobei das Gepäckrückhalteelement (7) an der Entladeseite des Wagenträgers (5) angeordnet ist und beweglich an dem Rahmen (3) angebracht ist, so dass es in die gleiche Drehrichtung wie der Wagenträger (5) bewegt werden kann, **dadurch gekennzeichnet, dass** die Träger-Kippachse (6) an dem Rahmen (3) an einer Entladeseite des Wagenträgers (5) angeordnet ist.

2. Vorrichtung (1) nach Anspruch 1, wobei das Gepäckrückhalteelement (7) bezüglich des Rahmens (3) um eine Rückhalteelement-Kippachse an der Entladeseite des Wagenträgers (5) kippbar ist.

3. Vorrichtung (1) nach Anspruch 2, wobei die Träger-Kippachse (6) und die Rückhalteelement-Kippachse im Wesentlichen koinzident sind.

4. Vorrichtung (1) nach Anspruch 2 oder 3, wobei das Gepäckrückhalteelement (7) und der Wagenträger (5) zusammenwirken, so dass sie unter Betriebsbedingungen während einer Zeit eines Kippens des Wagenträgers (5) synchron gekippt werden.

5. Vorrichtung (1) nach einem der Ansprüche 2 bis 4, wobei das Gepäckrückhalteelement (7) um einen größeren Winkel kippbar ist als der Wagenträger (5).

6. Vorrichtung (1) nach einem der vorstehenden Ansprüche, wobei das Gepäckrückhalteelement eine Förderbahn (7) zum Transportieren von Gepäckstücken in eine Richtung weg von dem Wagenträger (5) aufweist.

7. Vorrichtung (1) nach Anspruch 6, wobei das Gepäckrückhalteelement (7) bewegbar ist zwischen einer aufwärts gerichteten Position (A) zum Zurückhalten von Gepäckstücken und einer liegenden Position (C) zum Transportieren von Gepäckstücken.

8. Vorrichtung (1) nach Anspruch 6 oder 7, wobei die Förderbahn (7) ein antreibbares Endlosförderband (8) zum Transportieren von Gepäckstücken aufweist.

9. Vorrichtung (1) nach einem der vorstehenden Ansprüche, wobei der Wagenträger eine Plattform (5) aufweist, auf welcher ein Gepäckwagen (2) angeordnet werden kann.

10. Vorrichtung (1) nach Anspruch 9, wobei die Plattform (5) länglich ist und eine Längsachse hat, die eine ähnliche Richtung wie die Träger-Kippachse (6) hat.

11. Vorrichtung (1) nach einem der vorstehenden Ansprüche, wobei der Rahmen (3) bewegbar ist.

12. Verfahren zum Betreiben der Vorrichtung (1) nach einem der vorstehenden Ansprüche, wobei mindestens ein Gepäckwagen (2) zu der Vorrichtung (1) gefahren wird und auf dem Wagenträger (5) angeordnet wird, wobei das Gepäckrückhalteelement (7) so eingestellt wird, dass es sich neben einer offenen Seite des Gepäckwagens (2) erstreckt, wonach gleichzeitig der Wagenträger gekippt wird und das Rückhalteelement (7) in die gleiche Richtung bewegt wird, so dass Gepäckstücke des Gepäckwagens (2) zurückgehalten werden, bis ein vorgegebener Kippwinkel des Wagenträgers (5) erreicht ist.

13. Verfahren nach Anspruch 12, wobei das Gepäckrückhalteelement (7) und der Gepäckwagen (2) voneinander wegbewegt werden, nachdem der vorgegebene Kippwinkel des Wagenträgers (5) erreicht worden ist.

## Revendications

1. Appareil (1) pour décharger des bagages d'un chariot à bagages (2), comprenant un bâti (3) et un support de chariot (5) pour supporter un chariot à bagages (2), le support de chariot (5) étant monté sur le bâti (3) et pouvant basculer par rapport à celui-ci autour d'un axe de basculement de support (6),
l'appareil (1) est pourvu d'un organe de maintien de bagages (7) pour empêcher des articles de bagages de tomber trop tôt d'un chariot à bagages (2) sur le support de chariot (5) pendant le basculement, dans lequel l'organe de maintien de bagages (7) est situé du côté déchargement du support de chariot (5) et est monté mobile sur le bâti (3) de sorte qu'il puisse être déplacé dans la même direction de rotation que le support de chariot (5), **caractérisé en ce que** l'axe de basculement de support (6) est situé au niveau du bâti (3) d'un côté déchargement du support de chariot (5).

2. Appareil (1) selon la revendication 1, dans lequel l'organe de maintien de bagages (7) peut être basculé par rapport au bâti (3) autour d'un axe de basculement d'organe de maintien du côté déchargement du support de chariot (5).

3. Appareil (1) selon la revendication 2, dans lequel l'axe de basculement de support (6) et l'axe de basculement d'organe de maintien coïncident sensiblement.

4. Appareil (1) selon la revendication 2 ou 3, dans lequel l'organe de maintien de bagages (7) et le support de chariot (5) coopèrent de sorte que, dans des conditions de fonctionnement, ils soient basculés de façon synchrone pendant une période de basculement du support de chariot (5).

5. Appareil (1) selon l'une des revendications 2 à 4, dans lequel l'organe de maintien de bagages (7) peut être basculé sur un angle plus important que le support de chariot (5).

6. Appareil (1) selon l'une des revendications précédentes, dans lequel l'organe de maintien de bagages comprend une piste de convoyeur (7) pour transporter des articles de bagages dans une direction s'éloignant du support de chariot (5).

7. Appareil (1) selon la revendication 6, dans lequel l'organe de maintien de bagages (7) est mobile entre une position debout (A) pour maintenir des articles de bagages et une position couchée (C) pour transporter des articles de bagages.

8. Appareil (1) selon la revendication 6 ou 7, dans lequel la piste de convoyeur (7) comprend une courroie de convoyeur continu entraînable (8) pour transporter les articles de bagages.

9. Appareil (1) selon l'une des revendications précédentes, dans lequel le support de chariot comprend une plateforme (5) sur laquelle peut être placé un chariot à bagages (2).

10. Appareil (1) selon la revendication 9, dans lequel la plateforme (5) est allongée en ayant un axe longitudinal qui a une direction similaire à l'axe de basculement de support (6).

11. Appareil (1) selon l'une des revendications précédentes, dans lequel le bâti (3) est mobile.

12. Procédé de mise en fonctionnement de l'appareil (1) selon l'une des revendications précédentes, dans lequel au moins un chariot à bagages (2) est entraîné sur l'appareil (1) et est placé sur le support de chariot (5), dans lequel l'organe de maintien de bagages (7) est défini de sorte qu'il s'étende près d'un côté ouvert du chariot à bagages (2), après quoi, simultanément, le support de chariot (2) est basculé et l'organe de maintien (7) est déplacé dans la même direction de sorte que des articles de bagages du chariot à bagages (2) soient maintenus jusqu'à ce qu'un angle de basculement prédéterminé du support de chariot (5) soit atteint.

13. Procédé selon la revendication 12, dans lequel l'organe de maintien de bagages (7) et le chariot à bagages (2) sont déplacés de façon à s'éloigner l'un de l'autre après que ledit angle de basculement prédéterminé du support de chariot (5) est atteint.
